# EUROPEAN PATENT APPLICATION

(11) **EP 0 957 611 A2**
(43) Date of publication of application: **17.11.1999**
(21) Application number: 99108508.5
(22) Date of filing: 03.05.1999
(51) Int. Cl.: H04L 12/42, H04L 12/56

(54) **Method of establishing a redundant mesh network using a minimum number of links**

(30) Priority: 12.05.1998 US 76444
(71) Applicant: AT&T Corp., New York, NY 10013-2412 (US)
(72) Inventor: Kujoory, Mohammed Ali, Lincroft, New Jersey 07724 (US); Sikora, John Joseph, Lincroft, New Jersey 07738 (US)
(74) Representative: Modiano, Guido, Dr.-Ing.

(57) **Abstract**

A communication network provides data transfer between multiple nodes. Dual switches are established at each identified distributed node. Each dual switch has two single switches which are internally connected. The dual switches are configured into a ring structure. Single switches in each dual switch are connected to one of the single switches contained in each adjacent dual switch. Switching logic is programmed into each single switch thereby allowing for routing of data via multiple paths in the ring structure. The number of links required to establish the network is equal to 2N where N is the number of nodes contained in the network.

## Description

### Technical Field

The present invention is directed to a method of establishing a redundant mesh network, and more particularly, to a method of establishing a redundant mesh network for dual switches which uses a minimum number of links.

### Background of the Invention

In a network system, multiple switches or nodes are coupled together to perform various tasks. In some cases, the task is the transfer of data from one node to another. In other cases, it is the actual determination of the routing path of the data as welt as the actual transfer of data. For example, the switches may be networked together as a campus network, Metropolitan Area Network or Wide Area Network (MAN/WAN) to connect a number of sites associated with a particular business entity to allow individuals using personal computer systems or other end user equipment at the various sites to communicate with one another. Such network systems are beneficial to users because they allow users to communicate with each other using tools such as electronic mail or by the ability to transfer data files between one another.

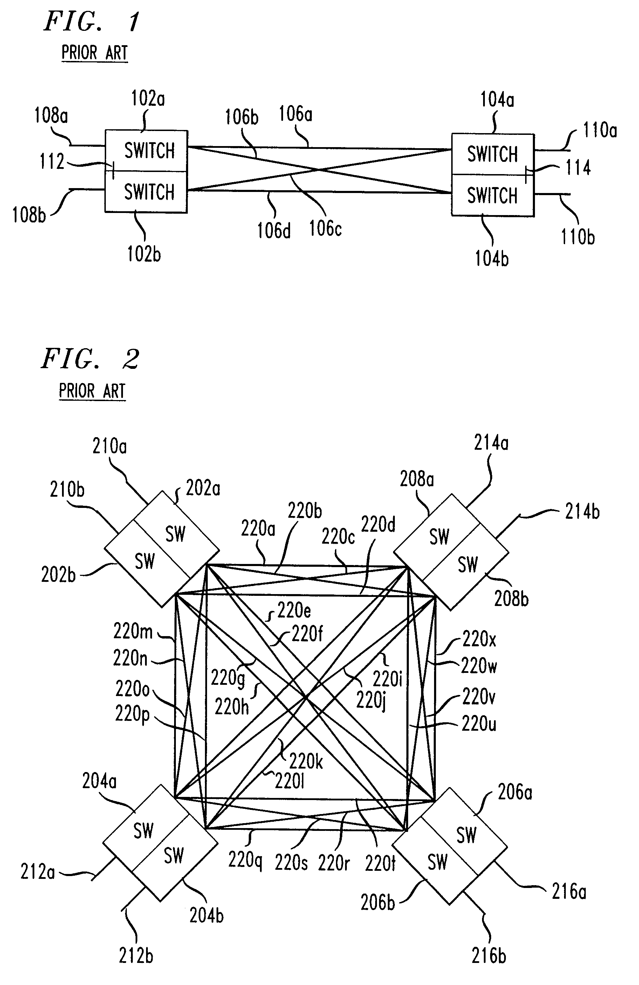

Many arrangements exist for connecting the switches or nodes together in order to allow for the efficient exchange of data between two or more nodes. Fig. 1 illustrates a portion of a fully redundant switched network as is well known to those skilled in the art. The network includes two dual switches 102, 104. Each switch 102, 104 is comprised of two identical switches 102a, 102b and 104a, 104b which provide adequate redundancy in the case of a failure. Quad links 106a, 106b, 106c and 106d connect each switch to every other switch. Data is received and delivered from switch 102 using links 108a and 108b. Likewise, data is received and delivered from switch 104 via links 110a and 110b. Links 108 and 110 may be connected to end user equipment such as a personal computer or another network. If any single switch 102a, 102b, 104a, 104b, any link 106a, 106b, 106c, 106d, or any combination of two network elements (e.g., links or switches) fail, excluding the two single switches in a dual switch, the network maintains its connectivity and function.

As can be seen from Fig. 2, as more switches are added to the network, the number of links increases dramatically. Network 200 has four dual switches 202, 204, 206, 208, each of which are fully connected to every other switch by links 220 to provide full redundancy in the network. In general, a fully connected mesh of N dual switches would require 2N(N - 1) links. In the case of network 200 where N=4, the number of links required is 2*4(4-1) or 24 links. As can be seen, by increasing the number of dual switches from two switches, as illustrated in Fig. 1 to four switches as illustrated in Fig. 2, the number of links required has increased by a factor of six. This large increase in the required number of links would quickly become impractical both in terms of cost and implementation.

Many times network designers resort to a fully meshed network to insure reliability and to reduce delay. By incorporating the maximum number of links within the network, an assurance can be made that data will be able to be transported between any two switches and that in most cases, the shortest path between the two switches can be utilized. Particularly in the case of a large network having a significant number of components, there is a greater chance that a component (e.g., a switch, node or link) will become faulty during network operation. A fault is generally defined as a component which ceases to perform its function correctly, however defined.

A network with hundreds or thousands or components has a relatively low mean time between failure for the network components. That is, there is a relatively high probability that one component within the network will fail within a given period of time. In order to be useful to the user(s) of the network, the network should be able to resolve these component failures. If one or more of the components in the network become faulty then the network must be reconfigured in the presence of these faults such that working components of the network can continue to perform their required functions.

In addition, depending upon the layout of a network, a faulty component could prevent the transfer of data to one or more switches which are operational. Depending on the type of network, this could mean that some end units or even connected networks could not communicate with one another.

For example, if a network contains faults for which it cannot be reconfigured to perform requested data transfers, then the network ceases to function correctly. Therefore, it is important for the design of a network to contain a minimum amount of redundancy such that the same or comparable functionalities can be performed by other working components in the network.

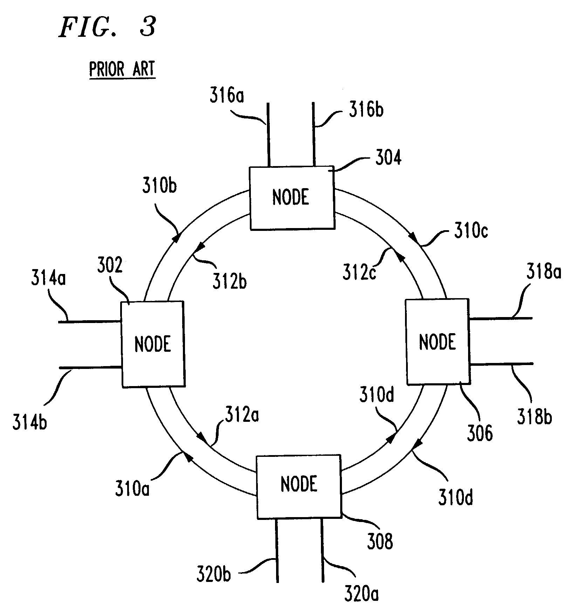

An example of a prior art network which utilizes a self-healing feature is illustrated in Fig. 3. The network illustrated in Fig. 3 is a Metropolitan Area Network (MAN) which is sometimes referred to as a Fiber Distributed Data Interface (FDDI). The FDDI as illustrated is comprised of four nodes 302, 304, 306, 308 which represent major hubs at which data is received and transmitted. The nodes provide no switching functionality and are merely conduits through which data may pass. The nodes 302, 304, 306, 308 are connected in a ring structure by two unidirectional links 310, 312. One of the links 310 transmits data in a clockwise direction and the other link 312 transmits data in a counter clockwise direction. Each node 302, 304, 306, 306 may be connected to end user equipment or another network such as a Local Area Network (LAN) via links 314, 316, 318, 320.

The self-healing advantage of the network may be illustrated using the following example. Suppose data is received by node 302 via link 314a and is being transmitted to node 308. Normally the data would be transmitted to node 308 over link 312a. If a fault occurred in link 312a, the data would have to be transmitted via another path. Node 302 would transfer the data to link 310b and the data would travel through node 304 to link 310c through node 306 to link 310d and finally to node 308. Transfer of data from node 302 to 308 would also be possible if both links 310a and 312a suffered faults. Essentially, nodes 302 and 308 would each form an internal connection (not shown) which would form a new ring and the data would be transferred between the two nodes as described above. While the alternate transfer path is not as efficient as the original path chosen, the network would not be unduly crippled and the ability to communicate between each node would continue. There is a need for a network architecture which is capably of providing adequate redundancy in an efficient manner while being able to minimize the number of links required between switches.

### Summary of the Invention

The present invention is directed to a communication network for providing data transfer between multiple nodes in the network. Dual switches are established at each identified distributing data node. Each dual switch is comprised of two single switches which are internally connected. The dual switches are configured into a ring structure. Single switches in each dual switch are connected to one of the single switches contained in each adjacent node. Switching logic is programmed into each single switch thereby allowing for routing of data via multiple paths in the ring structure. The number of links required to establish the network being equal to 2N where N is the number of nodes contained in the network.

The present invention is also directed to a method for establishing a redundant mesh network for dual switches with a minimum number of links.

### Brief Description of the Drawings

The present invention is illustrated by way of example and not limitation in the accompanying figures in which like reference numerals indicate similar elements and in which:
FIG. 1 is a prior art fully redundant mesh network comprised of two dual switches.
FIG. 2 is a prior art fully redundant mesh network comprised of four dual switches.
FIG. 3 is a prior art network architecture comprised of four nodes.
FIG. 4 is a diagram of a network architecture in accordance with the present invention.
FIG. 5 is a diagram of the network architecture of FIG. 4 in which failures in the network exist.
FIG. 6 is a diagram of a network architecture in accordance with another embodiment of the present invention.

### Detailed Description

The present invention provides a technique for establishing a backbone communications network, such as an Asynchronous Transfer Mode (ATM) network, a telecommunications switched network, an Internet Protocol (IP) network, or other type of comparable network. A redundant switched network uses a mesh topology with dual switches located at each node which are connected by multiple links.

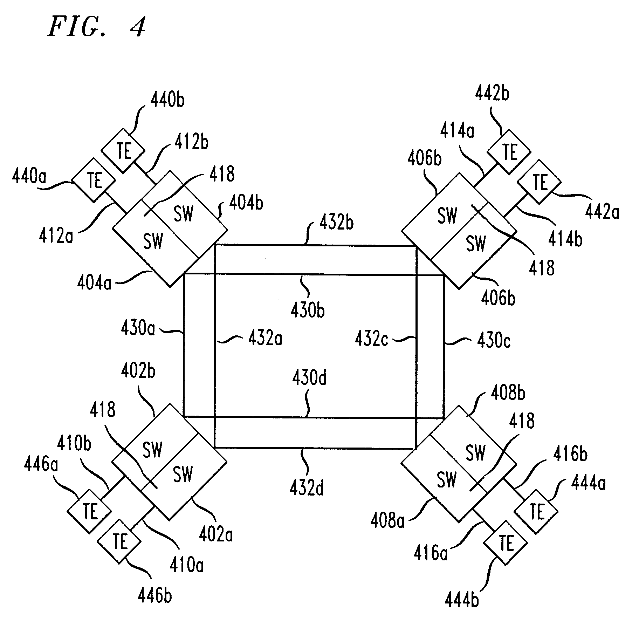

Fig. 4 illustrates an example of a small portion of a redundant switched network established using the method of the present invention. The network is comprised of dual switches 402, 404, 406, 408. Each dual switch 402, 404, 406, 408 is comprised of two switches 402a, 402b, 404a, 404b, 406a, 406b, 408a, 408b. Each switch within the pair can communicate internally via connection 418 which allows for the transfer of data between each switch in any given pair. Each switch within a given switch pair is also connected to one switch in each adjacent switch pair via a link. As such, switch 402a is connected to switch 408a via link 432d and switch 404b via link 432a. Switch 402b is connected to switch 408b via link 430d and switch 404a via link 430a. Switch 404a is connected to switch 402b via link 430a and switch 406a via link 430b. Switch 404b is connected to switch 402a via link 432a and switch 406b via link 432b. Switch 406a is connected to switch 404a via link 430b and switch 408b via link 430c. Switch 406b is connected to switch 404b via link 432b and switch 408a via link 432c. Switch 408a is connected to switch 406b via link 432c and switch 402a via link 432d. Switch 408b is connected to switch 406a via link 430c and switch 402b via link 430d.

The resulting architecture is like a ring structure. Each dual switch is also able to connect to an external device or network via links 410, 412, 414, 416. In accordance with the present invention, only two links are required between each adjacent dual switch node to achieve full redundancy and therefore a total number of 2N links is required where N= number of switch nodes. By comparing Fig. 2 and 4, it can be seen how the invention simplifies the topology and reduces the number of links and interface cards.

Included in each switch are the necessary switching tables which allow a given switch to use an alternate transmission path in the case of a failure in either the links or other switches. The switching tables are of the type commonly used in networks in operation today and are well known to those skilled in the art. The switching tables provide, among other things, the necessary path. needed to reroute data to be transferred by the switch.

The following is an example of how data may be transferred through the network. If data were to be received at link 412a and be destined for link 416b the following routing would likely occur under ideal circumstances. Switch 404a would receive the data and consult its switching table for direction on what path the data should be routed to get to link 416b. Assuming light traffic and no known faults, the data would be transferred using the most efficient path. As such, the data would be received by switch 404a and be transmitted via link 430b to switch 406a and through link 430a to switch 408b to link 416b. Depending upon the conditions of the network such as traffic levels, alternate routing paths may be used as would be defined in the switching tables of switch 404a.

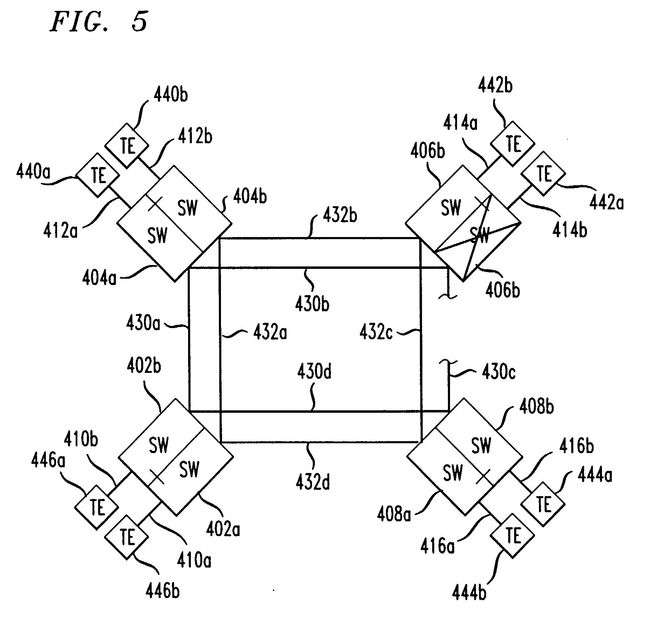

An example of how the present invention may operate in the case of a failure is described below and illustrated in Fig. 5. Fig. 5 illustrates the network of Fig. 4 in which a failure has occurred in switch 406a and link 430c. If data were to be received at link 412a and be destined for link 416b as in the example before, the routing would necessarily be different due to the indicated failures in the network. When the data is received by switch 404a a switching table contained within switch 404a would be consulted for routing instructions. Since the original routing described above can not be accomplished, an alternate routing path must be followed. One possible alternate path would be to transmit the data from switch 404a to switch 404b via the internal connection 418. The data would then travel via link 432b to switch 406b and via link 432c to switch 408a. The data would then be transferred to switch 408b via internal connection 418 and finally to link 416b. It is to be understood by those skilled in the art that a similar alternate routing path would be developed if the failure occurred in link 432c rather than 430c.

Link 416b would then transmit the data to terminal equipment 444a. Terminal equipment 444a could be a personal computer, telephone, facsimile machine, public branch exchange (PBX) or any other type of adjunct. Terminal equipment 444a could also be another network such as a Local Area Network (LAN).

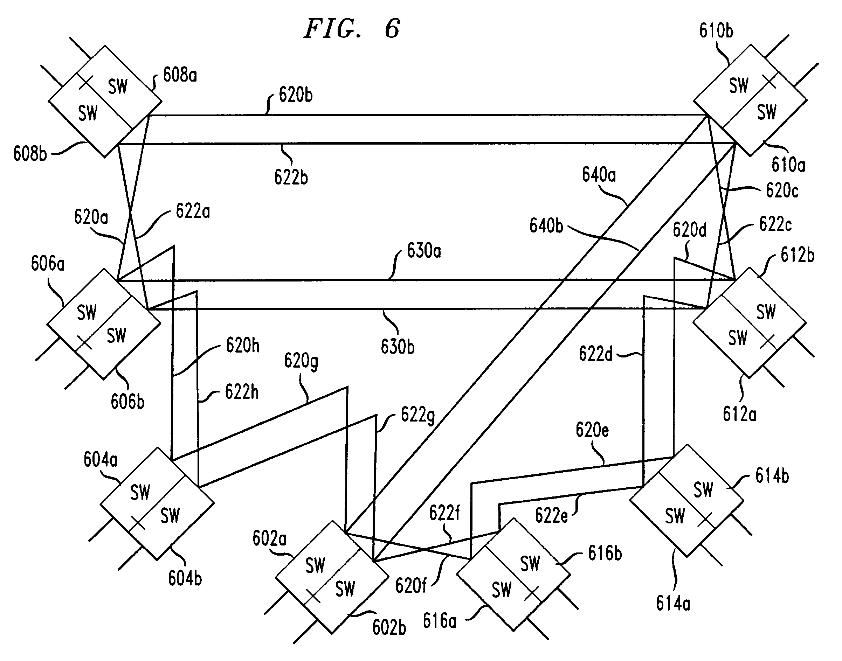

While the ring topology of the present invention provides adequate redundancy in the case of a failure, in a network comprised of a large number of switches the delay introduced by some of the routing paths may not be acceptable. In such a case additional links may be made between non-adjacent dual switches as illustrated in Fig. 6.

Fig. 6 illustrates a network comprised of eight dual switches 602, 604, 606, 608, 610, 612, 614, 616. Each of the dual switches contains two single switches 602a, 602b, 604a, 604b, 606a, 606b, 608a, 608b, 610a, 610b, 612a, 612b, 614a, 614b, 616a, 616b which are connected to a single switch of an adjacent switch by links 620, 622. In addition, in order to reduce possible delays causes by long routing paths additional link pairs have been added. Link 640 connects dual switches 602 and 610 and link 630 connects dual switches 606 and 612.

As such, if data is being transferred from switch 616 to switch 610 it can be routed from switch 616a via link 620f to switch 602a and via link 640a to switch 610b. Alternatively, the data can be routed from switch 616a via link 620e to switch 614b and via link 620d to switch 612b and via link 620c to switch 610b. The actual routing of the data would be determined by the switching table associated with switch 616.

While the present invention has been described in connection with the illustrated embodiments, it will be appreciated and understood that modifications may be made without departing from the true spirit and scope of the invention. It is to be understood that the particular embodiments shown and described by way of illustration are in no way intended to be considered limiting.

Therefore, references to details of particular embodiments are not intended to limit the scope of the claims, which in themselves recite only those features regarded as essential to the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A communication network for providing data transfer between multiple nodes in the network comprising:
a plurality of dual switches, each dual switch being located at one of said multiple nodes, each dual switch comprised of two single switches which are internally connected,
a plurality of links, each link connecting a single switch within a given dual switch to another single switch contained within another dual switch which is located in an adjacent node, the number of links contained in the network being equal to 2N where N is the number of nodes contained in the network, and
switching logic for determining the routing of data via multiple paths formed by the interconnected switches and links.

2. The network of claim 1 wherein said interconnection of links and switches forms a ring structure.

3. The network of claim 1 further comprising additional links, said additional links connecting a single switch contained within a dual switch and another single switch contained in another non-adjacent dual switch.

4. The network of claim 1 wherein at least one dual switch is connected to one or more external devices.

5. The network of claim 4 wherein said external device is a personal computer.

6. The network of claim 4 wherein said external device is a telephone.

7. The network of claim 4 wherein said external device is a facsimile machine.

8. The network of claim 4 wherein said external device is a public branch exchange.

9. The network of claim 4 wherein said external device is a local area network.

10. A method of establishing a mesh network using a minimum number of links comprising:
identifying a location for each data transfer node,
locating a dual switch at each identified node, each dual switch comprised of two single switches which are internally connected,
connecting each single switch contained within a given dual switch to a single switch contained in each adjacent dual switch via a link, wherein the number of links required to establish the network is 2N where N is the number of nodes contained in the network.

11. The method of claim 10 wherein said connecting step results in a network having a ring structure.

12. The method of claim 11 wherein each switch comprises switching logic for determining routing paths for data to be transferred from said switch.

13. The method of claim 10 further comprising the step of: adding additional links between non-adjacent switches to create additional data transfer paths in said network.

14. The method of claim 10 wherein at least one dual switch is connected to one or more external devices.

15. The method of claim 14 wherein said external device is a personal computer.

16. The method of claim 14 wherein said external device is a telephone.

17. The method of claim 14 wherein said external device is a facsimile machine.

18. The method of claim 14 wherein said external device is a public branch exchange.
